# EUROPEAN PATENT SPECIFICATION

(11) **EP 0 981 499 B1**
(45) Date of publication and mention of the grant of the patent: **29.08.2001**
(21) Application number: 98920124.9
(22) Date of filing: 12.05.1998
(51) Int. Cl.: C02F 3/28

(54) **METHOD FOR REDUCING THE LEVEL OF HYDROGEN SULFIDE IN WASTEWATER SYSTEMS**
VERFAHREN ZUR VERMINDERUNG DES SCHWEFELWASSERSTOFFGEHALTES IN EINEM ABWASSERSYSTEM
PROCEDE POUR REDUIRE LA TENEUR EN SULFURE D'HYDROGENE DANS LES SYSTEMES DE TRAITEMENT DES EAUX USEES

(30) Priority: 12.05.1997 US 854828
(43) Date of publication of application: 01.03.2000
(73) Proprietor: DCV, Inc., Wilmington, Delaware 19810 (US)
(72) Inventor: HELLER, Kenneth, J., Denver, CO 80216 (US); HELLER, Johnathan, D., Denver, CO 80216 (US); BALLINGER, Kenneth, E., Jr., Kennett Square, PA 19348 (US)
(74) Representative: Jones, Alan John
(86) International application number: US9808883
(87) International publication number: WO9851625

(56) References cited:
- EP-A- 0 591 000
- GB-A- 2 257 428
- US-A- 3 300 404
- US-A- 4 911 843

## Description

### BACKGROUND OF THE INVENTION

An altogether too familiar sensation in many communities having wastewater treating systems is the rotten egg smell of the gas hydrogen sulfide. Hydrogen sulfide (H₂S) is metabolic product of sulfate-reducing bacteria which are ordinarily contained in anaerobic wastewater streams. This gas not only has a highly offensive odor, but is toxic even in quite small concentrations. Though H₂S is present in the air above wastewater in only small concentrations, it has been very difficult to reduce it significantly in even the most efficiently operated municipal and industrial wastewater treatment systems.

There are two basic approaches to reducing H₂S in wastewater systems. One approach to the problem of reducing H₂S odor is to inhibit the production of H₂S by various means within the wastewater stream. The other approach is to remove the H₂S produced in such streams.

As to the first method, it is known to add nitrates or nitrites to sewage to reduce biological oxygen demand (BOD) and to suppress the formation of H₂S by bacterial action. (U.S. patents 3,300,404; 4,446,031 and 4,681,687).

As to the second method, in U.S. 4,680,127 is disclosed a method for removing H₂S by addition of glyoxal and formaldehyde to scavenge H₂S from aqueous gas streams. Also, U.S. 4,911,843 to Hunniford et al., discloses a method for removing dissolved H₂S form sewage by the addition of aqueous solutions of inorganic nitrates to stimulate the growth of bacteria which consume H₂S metabolically. A different technique is taught by Tatnall in U.S. 5,500,368. This patent discloses the addition of very small amounts of finely divided particles of anthraquinones to a medium containing sulfate-reducing bacteria to inhibit production of H₂S therein. U.S. 5,385,842 to Weimer et al., discloses inhibiting H₂S production by sulfate-reducing bacteria by contacting the medium containing the sulfate-reducing bacteria with a wide variety of anthraquinone compounds. In GB 2 257 428A, there is disclosed a composition for reducing the odor of sewage by dosing it with a composition comprising a mono-terpene oil, a chloroanthraquinone and, optionally, an iron compound. The reduction in odor is accomplished by reducing the production of H2S in the sewage.
While all of the foregoing methods for inhibiting the formation of H₂S and for removing H₂S are effective to some extent, none is wholly satisfactory because the efficiency of each is low and the relative cost of utilizing them is quite high. For that reason, applicants have sought an efficient and more cost-effective method for keeping the odor level of wastewater streams down to a safe level by a method which involves both keeping the production of H₂S production low and removing whatever low amount of H₂S is produced.

### SUMMARY OF THE INVENTION

Therefore, in its primary aspect, the invention is directed to a synergistic method for reducing the amount of hydrogen sulfide contained in a wastewater stream containing both sulfate-reducing bacteria and H₂S-metabolizing bacteria comprising adding to the wastewater stream metal nitrate to provide a source of nitrogen for the H₂S-metabolizing bacteria and finely divided particles of polycyclic anthraquinone or precursor thereof to inhibit the production of H₂S by the sulfate-reducing bacteria.

### DEFINITION

As used herein, with respect to the accessibility of sulfate-reducing bacteria and hydrogen sulfide-metabolizing bacteria to the flowing wastewater stream, the term "containing" includes both bacteria within the flowing stream as well as bacteria within any biofilm formed on the inner surface of the conduit through which the wastewater is flowing.

### DETAILED DESCRIPTION OF THE INVENTION

### A. In General

It is recognized, in a very general sense, that each of the added reactants to wastewater systems treated in accordance with the invention perform a function for which they are previously known. However, applicants have discovered that when they are used together, whether simultaneously or sequentially, they function in a highly synergistic manner. That is, both the degree of bacterial inhibition by the polycyclic quinones and the extent of H₂S consumption resulting from nitrate addition are improved far beyond that level which can be obtained by either technique by itself.

Furthermore, an important advantage of the method of the invention is that no separation step is required in handling the treated wastewater. Both the inhibition of H₂S formation and the metabolism of the H₂S are accomplished without the necessity of separating either the reactants or the by-products of the reaction products from the wastewater system.

### B. Polycyclic Ouinones

Unlike biocides, which are aimed at killing sulfate-reducing bacteria, the polycyclic quinones used in this invention only inhibit their activity. Studies have shown that the polycyclic quinones block the production of adenosine triphosphate by the bacteria, thereby removing the bacteria's ability to respire via sulfate reduction. Without sulfate reduction, H₂S cannot be produced by the bacteria. Nevertheless, the polycyclic quinones have no adverse affect on the H₂S-metabolizing bacteria.

**1. Composition**: A wide variety of polycyclic quinones can be used in the invention. As used herein, the term "polycyclic quinone" refers to bicyclic, tricyclic and tetracyclic condensed ring quinones and hydroquinones, as well as precursors thereof. On the whole, the non-ionic polycyclic quinones and polycyclic hydroquinones ( herein referred to collectively as PCQs) have very low solubility in water at ambient temperatures. For use in the invention, it is preferred that such PCQs have a water solubility no higher than about 1,000 ppm, by weight.

However, as noted above, certain precursors of such PCQs can also be used in the invention either combined with the relatively insoluble PCQs or by themselves. Such precursors are anionic salts of PCQs which are water soluble under alkaline anaerobic conditions. However, these materials are not stable and are easily converted to the insoluble quinone form upon exposure to air. Thus, when anionic PCQs are applied to plants and exposed to air, they are quickly changed to the water-insoluble, more active quinone form.

Among the water-insoluble PCQs which can be used in the invention are anthraquinone, naphthoquinone, anthrone(9,10-dihydro-9-oxo-anthracene), 10-methylene-anthrone, phenanthrenequinone and the alkyl, alkoxy and amino derivatives of such quinones, 6,11-dioxo-1H-anthra[1,2-c]pyrazole, anthraquinone-1,2-naphthacridone, 7,12-dioxo-7,12-dihydroanthra[1,2-b]pyrazine, 1,2-benzanthraquinone, 2,7-dimethylanthraquinone, 2-methylanthraquinone, 3-methylanthraquinone, 2-aminoanthraquinone and 1-methoxyanthraquinone. Of the foregoing cyclic ketones, anthraquinone and methylanthraquinone are preferred because they appear to be more effective. Naturally occurring anthraquinones can be used as well as synthetic anthraquinones.

Other PCQs which can be used include insoluble anthraquinone compounds such as 1,8-dihydroxy-anthraquinone, 1-amino-anthraquinone, 1-chloro-anthraquinone, 2-chloro-anthraquinone, 2-chloro-3-carboxyl-anthraquinone, 1-hydroxyanthraquinone and unsubstituted anthraquinone. Various ionic derivatives of these materials can be prepared by catalytic reduction in aqueous alkali.

In addition, a wide variety of anthrahydroquinone compounds can be used in the method of the invention. As used herein, the term "anthrahydroquinone compound" refers to compounds comprising the basic tricyclic structure such as 9,10-dihydroanthrahydroquinone, 1,4-dihydroanthrahydroquinone, and 1,4,4a,9a-tetrahydroanthrahydroquinone. Anthrahydroquinone itself is 9,10-dihydroxyanthracene.

More particularly, both water-insoluble and water-soluble forms can be used. The non-ionic compounds are largely insoluble in aqueous systems, while ionic derivatives, such as di-alkali metal salts, are largely soluble in water. The water soluble forms are stable only in high pH anaerobic fluids. Low pH fluids (pH less than about 9-10) will result in the formation of the insoluble molecular anthrahydroquinone. Aerobic solutions will incur oxidation of the anthrahydroquinones to anthraquinone. Thus, anthrahydroquinones will not exist for long periods of time in an aerated environment. For these reasons, anthrahydroquinone treatments are usually implemented with the soluble ionic form in a caustic solution. Sodium hydroxide solutions are preferred over the hydroxides of other alkali metals for economic reasons.

**2. Configuration**: Because most of the sulfate-reducing bacteria contained in wastewater systems are found in biofilms formed on the periphery of the wastewater conduits, it is necessary that the polycyclic quinones be able to penetrate into the biofilms at low dosages without undergoing reaction.

The extraordinary effectiveness of various forms of anthraquinone lies in their non-reactivity. These products are transported into the biofilm, diffuse through the biofilm voids, and then diffuse or are randomly transported by Brownian motion into the bacterial microcolonies without reduction in concentration as a consequence of a reaction with biofilm constituents. These anthraquinone materials are unaffected by other bacteria or the exopolysaccharide matrix present in the biofilm.

Even though solid particles of polycyclic quinone (PCQ) are required to inhibit the sulfate-reducing bacteria activity, the PCQ can be introduced into the microbial environment in several physical forms. The PCQ can be introduced as a dispersion of these solid particles while an ionic (sodium salt) form of the PCQ will allow it to be solubilized in an anaerobic caustic solution with pH greater than 12 and preferably greater than 13. The salt stays soluble if the pH of the solution remains above about 12, with precipitation of solid PCQ taking place as the pH is reduced below this value. In the soluble form or with a slight amount of precipitated PCQ (typically in colloidal form), anthraquinone is in molecular form or consists as extremely small (submicron-sized) particles. The PCQ molecules or colloidal particles will then be able to move freely in the biofilm, contacting sulfate-reducing bacteria cells easily. Contact of PCQ with the sulfate-reducing bacteria and partitioning of the PCQ into the cell membrane blocks the organism's adinosine triphosphate production. In addition, decreases in pH in the biofilm (due to acid production from other bacteria in the biofilm or due to a sweeping of lower pH fluid through the pipe) will precipitate more small PCQ particles from the solution within the biofilm. This will expose the sulfate-reducing bacteria within the biofilm to additional PCQ particles, furthering the efficacy of the anthraquinone treatment. When the PCQ added to the wastewater is in the form of a suspension of finely divided particles, it is preferred that their largest dimension be no greater than 50 micrometers, and preferably no greater than 5 - 10 micrometers so that they can more easily pass through biofilm.

Notwithstanding the fact that the active species seems to be the insoluble form of anthraquinone, it is nevertheless preferred to use the ionic (water-soluble) anthraquinone form because it diffuses into the biofilm and thus contacts the sulfate-reducing bacteria more readily. The activity of the ionic form of the anthraquinone seems to be derived from its conversion from the ionic form to the non-ionic form by which it is precipitated as very fine particles which attach to the sulfate-reducing bacteria.

Whether the soluble or insoluble anthraquinone is used, it has been observed that the functional attachment of the anthraquinone particles to the bacteria is limited in time by metabolism of the particles by the sulfate-reducing bacteria. Thus, application of the treating medium must be repeated periodically in order to maintain inhibition effectiveness.

### C. Methods of Operation

The customary method for carrying out nitrate addition in waste water systems is continuous addition to the flowing waste water stream. On the other hand, the addition of PCQ or precursors thereof in accordance with the invention can be carried out in a variety of ways. For example, nitrate addition can be stopped, the PCQ then added to the waste water stream all at one time in an amount sufficient to be effective for an extended time, after which nitrate addition is resumed as soon as PCQ addition is completed. A further method is to add the PCQ continuously to the waste water either by admixing it with the nitrate solution or by adding the PCQ directly to the waste water stream simultaneously with the nitrate. For ease in metering, the metal nitrate is usually added in aqueous solution. The PCQ is added as an aqueous suspension of finely divided PCQ particles. When PCQ precursors are used, they are added in the form of an aqueous solution of alkali metal salts.

From the foregoing discussion, it can be seen that the addition of PCQ or PCQ precursor can be made either upstream of (before) nitrate addition, simultaneously, or downstream of (after) nitrate addition.

It is preferred that the addition of the nitrate and PCQ treating solutions be started when the oxidation-reduction potential (ORP) of the wastewater steam is between -240 and -50 mv and continued until the ORP of the treated wastewater stream exceeds -50mv.

### EXAMPLES

### Example 1

A series of tests was carried out in an urban wastewater system among three vacuum collection systems (Stations A, B and C) connected by 6 inch (15.2 cm) diameter pipe. The distance between Stations A and B was 5,218 feet (1590m) and the distance between Stations B and C was 2,453 feet (748m). Normal wastewater flow between Stations A and B is 138 - 180 thousand gallons (522-681 m³) per day and normal flow between Stations B and C is 367 - 430 thousand gallons (1389-1628 m³) per day.

This segment of the wastewater system is normally treated with 80 gallons (303L) per day of nitrate to remove hydrogen sulfide, by which the level H₂S is reduced to 1mg/L.
For purposes of this test, the above-described parts of the wastewater system were operated for seven days without the addition of either nitrate or AQ. At the end of the seven days, the ORP of the system was -153 and H₂S level of 5.6 ppm.
Upon completion of the above-described seven-day test in which no action was made to remove H₂S, an aqueous dispersion containing 50% wt. anthraquinone was added to the system periodically at the rate of 6.5 gallons (24.6 L) per day for a period of six days. At the end of the six day period, the ORP of the system was -151 and the H₂S level was reduced to 4.0ppm.

Following the above six day test using only anthraquinone for treatment, the addition of anthraquinone was stopped and continuous nitrate addition to the system was resumed at a level only ten percent of the previous rate of addition. That is, only 8 gallons (30L) of nitrate solution was added daily instead of the previous level of 80 gallons (303L) daily. Interestingly, During the 11 days following resumption of nitrate addition during which anthraquinone addition was discontinued altogether, the ORP of the wastewater dropped to zero and the H₂S level in the system dropped to 0.8 ppm.

Addition of AQ is now made once per month and H₂S is still at the 0.8 - 1.0 ppm level which is considered acceptable. The cost savings to the municipality more than paid for the use of AQ. A continued use of only 8 gallons (30L) of nitrate per day indicates continued synergy between the reactants.

### Example 2

A test was conducted in a lift station of a community waste water system discharging about 75,000 gallons/day (284,000 L/day) of waste water into an eight inch force main discharging 2,550 feet (777m) downstream into a gravity collection line. Without the addition of materials to control the hydrogen sulfide level, the level of hydrogen sulfide in the waste water stream was 30 mg/L. By addition of 18 gallons/day (68 L/day) of potassium nitrate solution alone, the hydrogen sulfide in the discharge was maintained at 0.95 mg/L. While continuing the addition of nitrate solution, the flowing stream was dosed with forty pounds (18 kg) of alkaline (pH 11) anthrahydroquinone over the course of a few minutes and the addition of sodium nitrate was reduced to 5.5 gallons/day (21 L/day). At the end of two weeks, the sulfide level was only 0.82 mg/L. Two weeks after the initial addition of AHQ, 40 pounds (18 kg) of anthrahydroquinone were again added to the flowing stream and the daily addition of nitrate was continued. The hydrogen sulfide level from the gravity collection line during the subsequent two week period remained at about the same level. These data show clearly the synergistic action of periodic PCQ addition in combination with continuous nitrate addition.

## Claims

1. A process for the treatment of a wastewater stream containing both sulfate-reducing bacteria and H2S-metabolizing bacteria to reduce the concentration of H2S dissolved therein comprising the steps:
A. Adding metal nitrate to the stream to provide a source of nitrogen for the H2S-metabolizing bacteria, thus to enable them to metabolize the dissolved H2S in the wastewater stream; and
B. Adding a polycyclic quinone or precursor thereof to the stream in sufficient amount to inhibit the production of H2S therein by the sulfate-reducing bacteria in the wastewater stream.

2. The process of claim 1 in which the polycyclic quinone is added to the wastewater stream in a form selected from (a) an aqueous alkaline solution of the ionic salt thereof, which is converted to finely divided particles of the water-insoluble non-ionic form upon exposure to lower pH in the wastewater stream, (b) an aqueous suspension of finely divided non-ionic particles and (c) mixtures thereof.

3. The process of claim 1 in which the wastewater is contained in a conduit, the inner surface of which bears a layer of biofilm in contact with the wastewater.

4. The process of claim 1 in which the polycyclic quinone or precursor thereof is added continuously to the waste water stream in admixture with an aqueous solution of the metal nitrate.

5. The process of claim 1 in which the polycyclic quinone is added to the wastewater in the form of finely divided particles, the largest dimension of which is no greater than 50 micrometers.

6. The process of claim 5 in which the largest dimension of the polycyclic quinone particles is 10 micrometers.

7. The process of claim I in which the polycyclic quinone or precursor thereof is added continuously to the wastewater stream simultaneously with the metal nitrate solution.

8. The process of claim 1 in which the addition of nitrate is continuous and the addition of polycyclic quinone or precursor thereof is periodic.

9. The process of claim 1 in which an aqueous suspension of finely divided particles of polycyclic quinone or precursor thereof is added to the nitrate-containing wastewater flow.

10. The process of claim 9 in which the aqueous suspension is added to the wastewater flow on a continuous basis.

11. The process of claim 1 in which addition of the polycyclic quinone and metal nitrate to the wastewater is started when the oxidation-reduction potential (ORP) of the wastewater is between-240 mv and -50 mv and is continued until the ORP exceeds -50mv.

## Patentansprüche

1. Verfahren zum Behandeln eines Abwasserstroms, der sowohl Sulfat reduzierende Bakterien als auch H₂S verstoffwechselnde Bakterien enthält, um die Konzentration an darin gelöstem H₂S zu verringern, das die Stufen umfasst:
A. Zugabe eines Metallnitrats zu dem Strom zur Bereitzustellung einer Stickstoffquelle für die H₂S-verstoffwechselnden Bakterien, um sie so in die Lage zu versetzen, das in dem Abwasserstrom gelöste H₂S zu verstoffwechseln; und
B. Zugabe eines polycyclischen Chinons oder eines Vorläufers davon zu dem Strom in einer ausreichenden Menge, um darin die Bildung von H₂S durch die Sulfat reduzierenden Bakterien in dem Abwasserstrom zu inhibieren.

2. Verfahren nach Anspruch 1, bei dem das polycyclische Chinon dem Abwasserstrom in einer Form zugegeben wird, die ausgewählt wird aus
(a) einer wässrigen alkalischen Lösung des ionischen Salzes desselben, das in feine Teilchen der in Wasser unlöslichen nicht-ionischen Form umgewandelt wird, indem man es einem niedrigeren pH-Wert in dem Abwasserstrom aussetzt,
(b) einer wässrigen Suspension von feinen nicht-ionischen Teilchen und
(c) Mischungen davon.

3. Verfahren nach Anspruch 1, bei dem das Abwasser in einer Rohrleitung enthalten ist, deren innere Oberfläche eine Schicht aus einem Biofilm trägt, der mit dem Abwasser in Kontakt steht.

4. Verfahren nach Anspruch 1, bei dem das polycyclische Chinon oder ein Vorläufer davon im Gemisch mit einer wässrigen Lösung des Metallnitrats dem Abwasserstrom kontinuierlich zugesetzt wird.

5. Verfahren nach Anspruch 1, bei dem das polycyclische Chinon dem Abwasser in Form von feinen Teilchen zugesetzt wird, deren größte Dimension nicht mehr als 50 µm beträgt.

6. Verfahren nach Anspruch 5, bei dem die größte Dimension der polycyclischen Chinon-Teilchen 10 µm beträgt.

7. Verfahren nach Anspruch 1, bei dem das polycyclische Chinon oder ein Vorläufer davon gleichzeitig mit der Metallnitrat-Lösung kontinuierlich dem Abwasserstrom zugesetzt wird.

8. Verfahren nach Anspruch 1, bei dem die Zugabe des Nitrats kontinuierlich erfolgt und die Zugabe des polycyclischen Chinons oder eines Vorläufers davon periodisch erfolgt.

9. Verfahren nach Anspruch 1, bei dem eine wässrige Suspension von feinen Teilchen aus polycyclischem Chinon oder eines Vorläufers davon dem Nitrat enthaltenden Abwasserstrom zugesetzt werden.

10. Verfahren nach Anspruch 9, bei dem die wässrige Suspension dem Abwasserstrom auf kontinuierlicher Basis zugesetzt wird.

11. Verfahren nach Anspruch 1, bei dem mit der Zugabe des polycyclischen Chinons und des Metallnitrats zu dem Abwasser begonnen wird, wenn das Oxidations-Reduktions-Potential (ORP) des Abwassers zwischen -240 und -50 mV liegt und diese fortgesetzt wird, bis das ORP -50 mV übersteigt.

## Revendications

1. Procédé de traitement d'un courant d'eaux usées contenant des bactéries sulfatoréductrices et des bactéries de métabolisation du H₂S, pour réduire la concentration en H₂S qui y est dissous, comprenant les étapes qui consistent à :
A. Introduire un nitrate métallique dans le courant pour offrir une source d'azote aux bactéries de métabolisation du H₂S, afin de leur permettre de métaboliser le H₂S dissous dans le courant d'eaux usées ; et
B. Introduire une quinone polycyclique ou un précurseur de celle-ci dans le courant, en quantité suffisante pour empêcher la production de H₂S dans le courant d'eaux usées par les bactéries sulfatoréductrices qui s'y trouvent.

2. Procédé selon la revendication 1, dans lequel la quinone polycyclique est introduite dans le courant d'eaux usées sous une forme choisie parmi (a) une solution alcaline aqueuse de son sel ionique, qui est converti en particules finement divisées de la forme non ionique, insoluble dans l'eau, lorsqu'elle est exposée à un pH inférieur dans le courant d'eaux usées, (b) une suspension aqueuse de particules non ioniques finement divisées, et (c) des mélanges de celles-ci.

3. Procédé selon la revendication 1, dans lequel les eaux usées sont contenues dans un conduit, dont la surface interne porte une couche de biofilm qui entre en contact avec les eaux usées.

4. Procédé selon la revendication 1, dans lequel la quinone polycyclique ou un précurseur de celle-ci est introduit en continu dans le courant d'eaux usées, en mélange avec une solution aqueuse du nitrate métallique.

5. Procédé selon la revendication 1, dans lequel la quinone polycyclique est introduite dans les eaux usées sous la forme de particules finement divisées, dont la plus grande dimension n'est pas supérieure à 50 µm.

6. Procédé selon la revendication 5, dans lequel la plus grande dimension des particules de quinone polycyclique est de 10 µm.

7. Procédé selon la revendication 1, dans lequel la quinone polycyclique ou un précurseur de celle-ci est introduit en continu dans le courant d'eaux usées, simultanément à la solution de nitrate métallique.

8. Procédé selon la revendication 1, dans lequel l'introduction du nitrate est continue et l'introduction de quinone polycyclique ou d'un précurseur de celle-ci est périodique.

9. Procédé selon la revendication 1, dans lequel une suspension aqueuse de particules finement divisées de quinone polycyclique ou d'un précurseur de celle-ci est introduite dans l'écoulement d'eaux usées contenant le nitrate.

10. Procédé selon la revendication 9, dans lequel la suspension aqueuse est introduite dans l'écoulement d'eaux usées d'une manière continue.

11. Procédé selon la revendication 1, dans lequel l'introduction de la quinone polycyclique et du nitrate métallique dans les eaux usées est démarrée lorsque le potentiel d'oxydoréduction (potentiel redox) des eaux usées est compris entre -240 mv et -50 mv, et est continuée jusqu'à ce que le potentiel redox dépasse -50 mv.
